(19) Europäisches Patentamt / European Patent Office / Office européen des brevets

(11) **EP 1 845 411 B1**

(12) **EUROPEAN PATENT SPECIFICATION**

(45) Date of publication and mention
of the grant of the patent:
**31.07.2013  Bulletin 2013/31**

(51) Int Cl.:
*G03B 13/18* (2006.01)          *G06T 5/00* (2006.01)
*H04N 5/232* (2006.01)

(21) Application number: **07007604.7**

(22) Date of filing: **13.04.2007**

(54) **Image restoration apparatus, camera and program**

Vorrichtung, Kamera und Programm zur Bildwiederherstellung

Appareil, caméra et programme de restitution d'images

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **14.04.2006  JP 2006112240
09.04.2007  JP 2007101323**

(43) Date of publication of application:
**17.10.2007  Bulletin 2007/42**

(73) Proprietor: **NIKON CORPORATION
Chiyoda-ku
Tokyo 100-8331 (JP)**

(72) Inventor: **Okazaki, Mitsuhiro
Chiyoda-ku
Tokyo 100-8331 (JP)**

(74) Representative: **HOFFMANN EITLE
Patent- und Rechtsanwälte
Arabellastrasse 4
81925 München (DE)**

(56) References cited:
**US-A1- 2003 002 746     US-A1- 2003 128 888
US-A1- 2005 243 350     US-A1- 2006 078 218**

• YI YAO ET AL: "Digital Imaging with Extreme Zoom: System Design and Image Restoration" COMPUTER VISION SYSTEMS, 2006 ICVS '06. IEEE INTERNATIONAL CONFERENCE ON NEW YORK, NY, USA 04-07 JAN. 2006, PISCATAWAY, NJ, USA,IEEE LNKD- DOI:10.1109/ICVS.2006.21, 4 January 2006 (2006-01-04), pages 52-52, XP010899407 ISBN: 978-0-7695-2506-8

• BEN-EZRA M ET AL: "Motion deblurring using hybrid imaging" PROCEEDINGS / 2003 IEEE COMPUTER SOCIETY CONFERENCE ON COMPUTER VISION AND PATTERN RECOGNITION, 18 - 20 JUNE 2003, MADISON, WISCONSIN; [PROCEEDINGS OF THE IEEE COMPUTER CONFERENCE ON COMPUTER VISION AND PATTERN RECOGNITION], LOS ALAMITOS, CALIF. [U.A, vol. 1, 18 June 2003 (2003-06-18), pages 657-664, XP010644960 ISBN: 978-0-7695-1900-5

**Description**

TECHNICAL FIELD

The present invention relates to a camera and a program.

TECHNICAL BACKGROUND

An optical image vibration reducing apparatus that reduces image vibration caused by hand movement at the time of shooting a photograph is known. Another vibration reducing apparatus is known as well, which is capable of reducing image vibration by an image restoration (for example, refer to Japanese Unexamined Patent Application Publication No. 2004-205799).
US 2006/078218A1 dislcoses a known camera having features equivalent to those set forth in the preamble to claim 1 below.

SUMMARY OF THE INVENTION

Embodiments of the present invention are able to provide an image restoration camera, and a program, which are capable of restoring an image with a simple construction.
The invention is defined by the appended claims.
In embodiments of the present invention, since a point spread function is calculated using an image in a specific area within a captured image, it is possible to perform image restoration with simple construction.

BRIEF DESCRIPTION OF THE DRAWINGS

For a better understanding of the present invention, and to show how the same may be carried into effect, reference will now be made, by way of example only, to the accompanying Drawings, in which:

Fig. 1 is a figure showing a general outline of a camera according to a first embodiment;
Fig. 2 is a flowchart showing a flow of an operation in the case of an S-mode being selected in the camera of the present embodiment;
Fig. 3 is a figure for explaining an operation of an AF area information acquiring part in the case of an S-mode being selected;
Fig. 4 is a figure schematically representing PSF in a two-dimensional domain;
Fig. 5 is a figure showing a distribution of AF areas of the camera of the first embodiment;
Fig. 6 is a figure showing a general outline of a camera according to a second embodiment; Fig. 7 is a figure showing an example of selection of an AF area of the camera of the second embodiment;
Fig. 8 is a figure showing a general outline of a camera system according to a third embodiment;
Fig. 9 is a figure showing a camera according to a fourth embodiment.:
Fig. 10 is a figure showing a general outline of a camera of the fourth embodiment;
Fig. 11 is a figure showing a general outline of an image restoration apparatus according to a fifth embodiment; and
Fig. 12 is a flowchart for explaining an operation of the image restoration apparatus of the fifth embodiment.

DETAILED DESCRIPTION

Hereinafter, more detailed description of exemplary embodiments of the invention will be given with reference to the drawings and more.

(First Embodiment)

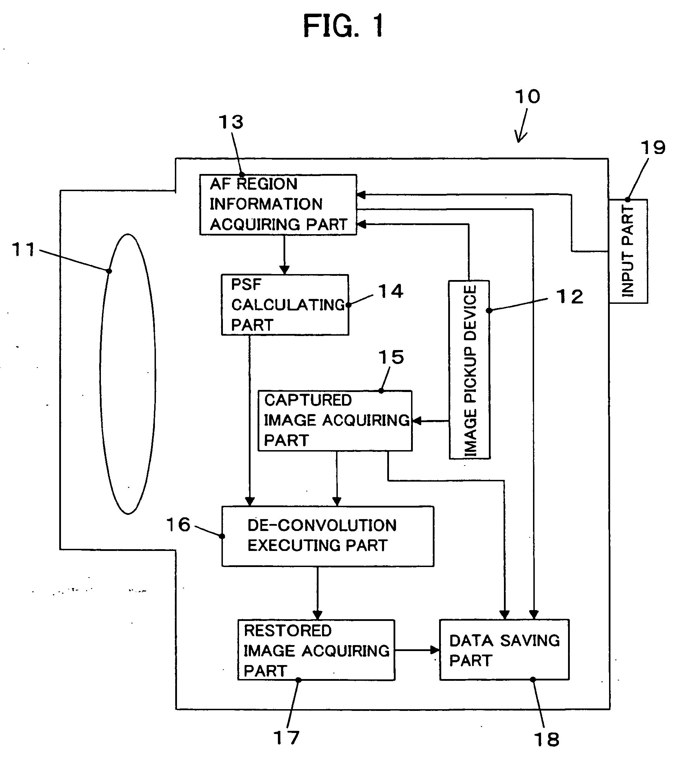

Fig. 1 is a figure showing an outline of a camera according to a first embodiment.
A camera 10 of the first embodiment comprises a lens 11, an image pickup device 12, an AF area information acquiring part 13, a PSF calculating part 14, a captured image acquiring part 15, a de-convolution executing part 16, a restored image acquiring part 17, a data saving part 18, an input part 19, and so on.
The lens 11 is a lens for leading light from a photographic subject to the image pickup device 12 and forming an image on the device 12.
The image pickup device 12 is a device for picking up an image formed on a capturing surface by the lens 11, and in this embodiment, CCD (Charge Coupled Device) is used for the pickup device 12. It is noted that such an image pickup device is not limited to the CCD, other types of image sensors such as CMOS (Complementary Metal Oxide Semiconductor) device may be employed for the image pickup device.

The AF area information acquiring part 13 acquires information about an AF (Auto Focus) area used for focusing in an auto focus (AF) operation, and specifies a position of a main subject within a captured image.

The PSF calculating part 14 calculates a PSF (Point Spread Function) from the captured image. A PSF is used in calculation of de-convolution described later.

It is noted that the AF area information acquiring part 13 and PSF calculating part 14 are parts of a control part (calculating processing part) that generally controls an operation of a camera.

The captured image acquiring part 15 is a part for temporarily storing a captured image that the pickup device 12 has picked up.

The de-convolution executing part 16 is a part for executing an image restoration calculation for the captured image data by use of a PSF calculated by the PSF calculating part 14, and in this embodiment, performs de-convolution so as to reduce image vibration included in the captured image.

The restored image acquiring part 17 is a part for temporarily storing a restored image obtained as a result of executing de-convolution in the de-convolution executing part 16.

The data saving part 18 is a part for saving a captured image and a restored image, and for this embodiment, is intended to record them on a removable memory card.

The input part 19 is a manipulating member capable of various kinds of input operations.

Now an AF operation performed by a camera of the present embodiment is described.

The camera of the embodiment can select an S-mode or C-mode as the AF operation.

The S-mode is an AF mode of focus-priority type, in which picture shooting is only allowed when an in-focus indicator, not shown, is turned on by pressing a shutter button halfway. In the S-mode, if the in-focus indicator is turned on under the condition of the halfway pressing of the shutter button, AF locking is then allowed for the duration of the halfway pressing of the shutter button, thereby to keep the focusing condition without any adjustment of focusing. Thus, as far as the shutter button is pressed halfway, a condition (in-focus state) on which a focal point is adjusted on the subject having been subjected to the AF locking could be kept even if the subject departed from the AF area for change of photograph composition.

The C-mode is an AF mode of release-priority type, in which a shooting act can be taken regardless of the in-focus indication at any time whenever the shutter button is pressed the whole way, and in which focusing adjustment is continued at all times during the halfway pressing of the shutter button. Consequently, when changing the composition, it continues to drive the lens 11 to focus onto a subject in any position covered by the AF area.

An operation of a camera according to this embodiment will now be described. It should be noted that operations described below assumes that settings are made to perform image restoration, but in the case of settings not to perform image restoration, it is also possible to perform much the same operations as the conventionally-known cameras with no operations associated with the image restoration.

Firstly, description is given about operations in the case of the S-mode being selected as an AF mode. In the following description, discussion will be offered on the assumption that a person is chosen as a main subject and the person is to be in focus. A main subject is not limited to a person, and may be any other article. For the sake of simplification, also noted is that description will be given on the assumption that an AF area 21 is only singly provided at a center of a shooting range.

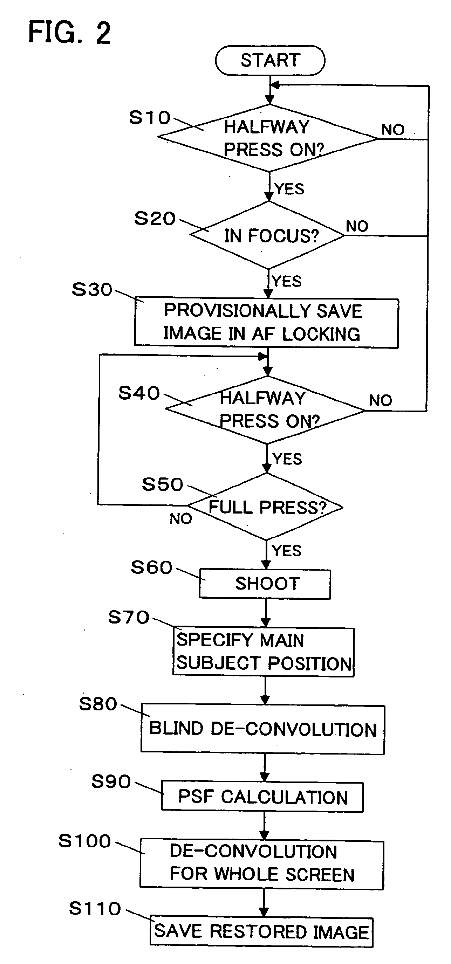

Fig. 2 is a flowchart showing flows of operations in the case of the S-mode being selected in a camera according to this embodiment.

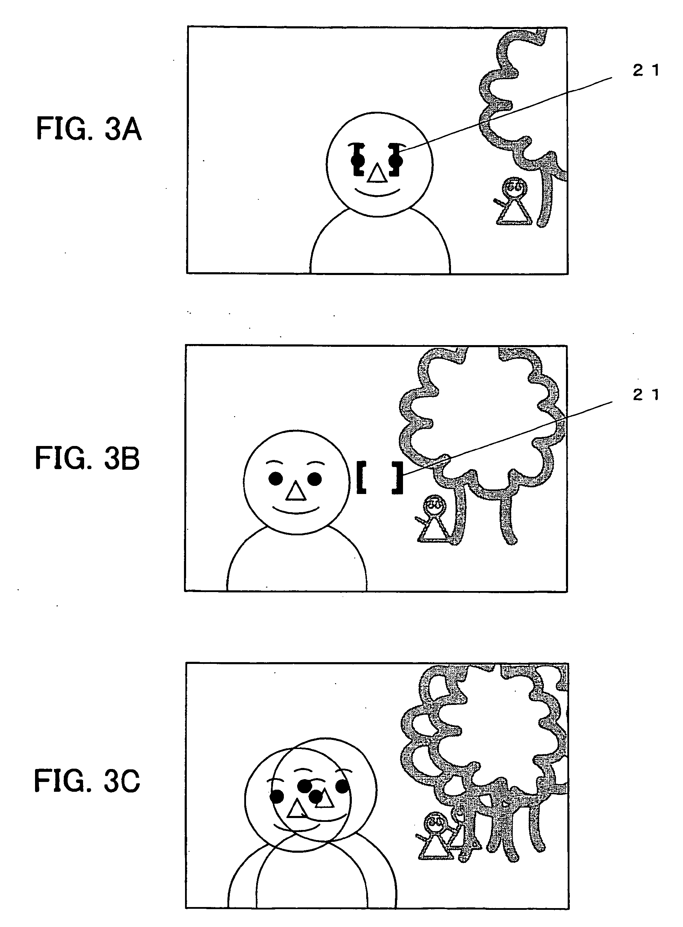

Fig. 3 is an illustration for describing operations of the AF area information acquiring part in the case of the S-mode being selected.

In a step (hereinafter, expressed just as "S") 10, it is determined whether or not the shutter button is pressed halfway. If the shutter button is pressed halfway, then the flow proceeds to S20, but if the shutter button is not pressed halfway, then the judgment of S10 is repeated.

In S20, it is determined whether or not focus is achieved. If in focus, the flow proceeds to S30, but if out of focus, the flow returns to S10.

In the S-mode, the shutter button is pressed halfway under a situation where the AF area 21 covers the person so as to achieve focus (Fig. 3A). When focus has been achieved, the in-focus indicator (not shown) lights up and the camera is in an AF-locked state in which the focusing conditions are held.

In S30, the AF area information acquiring part 13 provisionally saves an image at the time of AF locking, which is obtained by the image pickup device 12 when the AF locking is performed, while storing a position of the AF area 21 that has been used at the time of AF locking.

In S40, it is determined whether or not the halfway pressing of the shutter button is continued. In the case where the shutter button continues to be pressed halfway, the flow proceeds to S50, and in the case where the shutter button is not pressed halfway, the flow returns to S10.

When change of a picture composition is desired, the composition is changed with the shutter button remaining pressed halfway on the condition that the in-focus indicator lights up (Fig. 3B). In the example shown in Fig. 3, the change in composition is realized in such a manner that a person is positioned to the left and a background tree is positioned on the right side of a capture field of view, but conditions that the person is in focus is maintained since the halfway pressing of the shutter button is continued.

In S50, it is determined whether the shutter button is pressed in the whole way or not. If the shutter button is pressed in the whole way, the flow proceeds to S60, and if the shutter button is not pressed in the whole way, the flow returns to S40.

In S60, image shooting is realized in the pickup device 12, a captured image is obtained (Fig. 3C). Fig. 3C also shows an example that image vibration occurs because of instability of hand movement at the moment of shooting action.

In S70, the AF area information acquiring part 13 compares the captured image and the image at the time of AF locking, that has been provisionally saved at that time, so as to specify at which position within the captured image the subject covered by the AF area 21 at the time of AF locking is located. It is noted that this comparison of the subjects may be implemented in a way that a plurality of feature points are extracted from the image obtained at the time of AF locking and search for the feature points is made in the captured image, for example.

If a position of the subject having been covered by the AF area 21 at the time of AF locking is specified in the captured image, then the AF area information acquiring part 13 informs the PSF calculating part 14 of information of the specified position.

In S80, the blind de-convolution is started.

Now, image restoration is described.

There is a method, referred to as "image restoration", that is schemed to bring an image deteriorated due to image vibration or something else close to a less deteriorated, ideal image.

Provided that (x, y) is a position coordinate on the screen, an image obtained at the time of no vibration nor something like that (hereinafter, referred to as "original image") is f(x, y), an image deteriorated due to vibration or something like that (hereinafter, referred to as "deteriorated image") is g(x, y), a point spread function (PSF) that is information about point images spread by camera vibration or something like that is h(x, y), and noise is n(x, y), the following relationship is held among them.

$$g(x, y) = f(x, y) \otimes h(x, y) + n(x, y)$$
$$\otimes \quad \text{denote} \quad \text{de-convolution}$$

If the point spread function h(x, y) and the noise n(x, y) are known, then the original image f(x, y) is obtained from the deteriorated image g(x, y) by carrying out de-convolution that is inverse operation of convolution.

Besides, even if the point spread function h(x, y) and the noise n(x, y) are unknown, there is a technique of achieving image restoration from the deteriorated image g(x, y) to the original image f(x, y), a method of image restoration, referred to as "blind de-convolution", is described by G. R. Ayers and J. C. Dainty, "Iterative blind de-convolution method and its applications, "Optics Letters, vol. 13(7), pp. 547-549, July 1988. In the present embodiment, this blind de-convolution is used to obtain a restored image with less image vibration from a captured image including some image vibration.

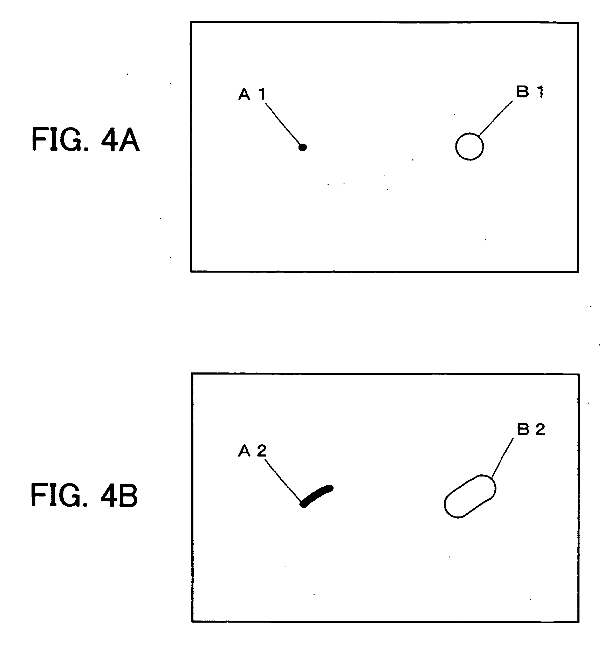

Fig. 4 is a figure schematically representing PSFs on a two-dimensional domain. Fig. 4A shows the case of no image vibration, and Fig. 4B shows the case where image vibration is added to the PSFs of Fig. 4A. The PSFs of Fig. 4 are depicted correspondingly to Fig. 3.

The PSFs of Fig. 4A belong to the case where the state shown in Fig. 3B is shot ideally without any image vibration. In the state of Fig. 3B, the person is in focus whereas the background tree is out of focus. Accordingly, when discussing the PSFs corresponding to them, as shown in Fig. 4A, the PSF in a position corresponding to the person becomes a point as shown in A1, and the PSF in a position of the background tree becomes a range B1 spread by effect of defocusing.

The PSFs of Fig. 4B belong to the case of a captured image including image vibration as in Fig. 3C. These PSFs of Fig. 4B further include components corresponding to loci of the image vibration in addition to the PSFs of Fig. 4A in response to effect of the image vibration.

When the blind de-convolution is applied to the captured image of Fig. 3C and the PSFs are obtained so as to obtain a restored image, a quality of the obtained restored image widely varies depending on at what position within the captured image is used to obtain a PSF.

On the condition that the blind de-convolution is performed using a partial image of the background tree portion of Fig. 3C, the resultant PSF is that shown in B2 of Fig. 4B. Fig. 4B is shown schematically, so that it shows as if locus components of the image vibration is accurately obtained in the PSF, but in practice, the partial image of the tree portion is out of focus, thereby resulting in a PSF in which the image vibration and the defocusing are combined, whereby the locus components of the image vibration is not accurately reflected onto the PSF. Moreover, if a restored image is obtained from the PSF of this B2, not only image vibration components but also defocus components are included in the PSF, so that not only computation for reducing the image vibration of the partial image of the background tree portion but also computation for reducing the defocus of the partial image of the background tree portion can be performed. If image restoration could be ideally carried out for this background tree portion, it would result in a partial image of the tree with being in focus but without any image vibration. In practice, however, it no longer results in an image the photographer has intended. Then, the computation is performed on the whole of a capture field of view, so that the defocus is enhanced even though the image vibration of a partial image of the person portion may be reduced. Therefore, it is not preferable to carry out the blind de-convolution by use of the partial image of the background tree portion.

On the other hand, if the blind de-convolution is performed using the partial image of the person portion of Fig. 3C, the resultant PSF will be that shown by A2 in Fig. 4B. Since the person portion is in focus, the locus components of the image vibration is accurately reflected onto the PSF, with no defocus component being included in this PSF. Therefore, if a restored image is obtained from the PSF of this A2, only the image vibration components are reduced and the partial image of the person portion is satisfactorily obtained with no image vibration and with being in focus. Furthermore, for the background tree portion, a satisfactory image can be obtained with no image vibration and with having defocus that was intended by the photographer at the time of shooting.

Thus, it is important what position of an image to be used within the captured image should be taken to carry out the blind de-convolution, in respect of improving a quality of the resultant restored image.

Returning to Fig. 2, for the reason as described above, this embodiment is intended to specify at what position the subject covered by the AF area 21 at the time of AF locking is located within the captured image and transmit the position information to the PSF calculating part 14 in S70.

In S90, the PSF calculating part 14 carries out the PSF calculation using the captured image. The calculation of the PSF refers the information transmitted in S70, i.e., the information about what position the subject covered by the AF area 21 at the time of AF locking is located at within the captured image, and performs the calculation of the PSF using an image at the corresponding position. In this way, an ideal PSF can be obtained as mentioned above. It is noted that the subject covered by the AF area 21 at the time of AF locking is usually a main subject the photographer wants to shoot more clearly, and from this point of view, execution of the calculation of the PSF for this position of the subject leads to good results.

In S100, de-convolution is performed for the whole area of the captured image using the resultant PSF so as to obtain a restored image.

In S110, the obtained restored image is saved. In addition to the restored image, the captured image can also be saved together.

The foregoing description is directed to the case of the S-mode being selected as an AF mode, but the following description will be given for the case of the C-mode being selected as an AF mode.

In the case of the C-mode being selected as an AF mode, the focusing on the subject covered by the AF area 21 until is operated just before the shutter button is pressed all the way. Therefore, in such a C-mode selection case, it is appropriate to assume that a main subject within the captured image is located at a position covered by the AF area 21 at the time of shooting. The AF area information acquiring part 13 in the C-mode being selected is predicated on a condition that the main subject exists in a position covered by the AF area 21 at the time of shooting, and sends the corresponding information to the PSF calculating part 14.

The foregoing description has been given on the assumption that the AF area 21 is provided in a single center of the captured image capture field of view for the sake of simplification, but a camera according to this embodiment may have plural AF areas 21 arranged in a plurality of positions within the captured image capture field of view as well as in the center of the capture field of view.

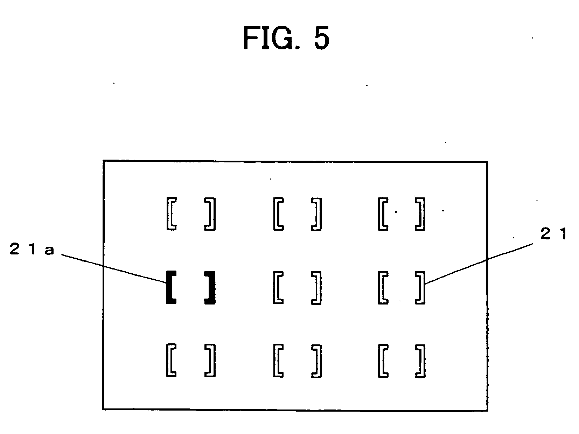

Fig. 5 is a figure showing an arrangement of the AF areas in a camera of the first embodiment.

In the example shown in Fig. 5, the AF areas 21 are arranged at nine points. The camera of this embodiment performs its AF operation using one of the AF areas 21 at these nine points, the one being decided by choice of the photographer or an automatic choice of the camera. In this connection, when the photographer selects an AF area 21 to be used, such selecting is realized by manipulating the input part 19. The AF area 21 selected by manipulating the input part 19 is made different in display from the other AF areas in order to distinguish it from the others. In this embodiment, a displayed color is modified like the AF area 21a shown in Fig. 5.

Although the foregoing description has been given on the assumption that the AF area information acquiring part 13 specifies a position of the main subject automatically, the position of the main subject specified by the AF area information acquiring part 13 may be displayed prior to execution of the blind de-convolution, and that position may be modified with the input part 19 being manipulated by the photographer.

Furthermore, a position to be used for the PSF calculation may be designated by manipulating the input part 19 without any operation of the AF area information acquiring part 13.

The modification or designation of a position to be used for the PSF calculation using the input part 19 may be implemented by extra setting using a selecting menu or something else.

Thus, since the input part 19 can be used to designate or modify a position to be used for the PSF calculation, an intention of the photographer can be accurately reflected thereon, thereby to increase a probability that satisfactory restored image can be obtained.

According to this embodiment, since a position of a main subject is specified using the information about the AF area 21 used in the AF operation and the PSF is calculated for the specified position, image restoration can be performed with taking account of an intention of the shooting so that a favorable restored image can be obtained.

In addition, it is possible to designate and modify a position to be used for the PSF calculation using the input part 19, so that a position of the main subject can be specified more reliably.

(Second Embodiment)

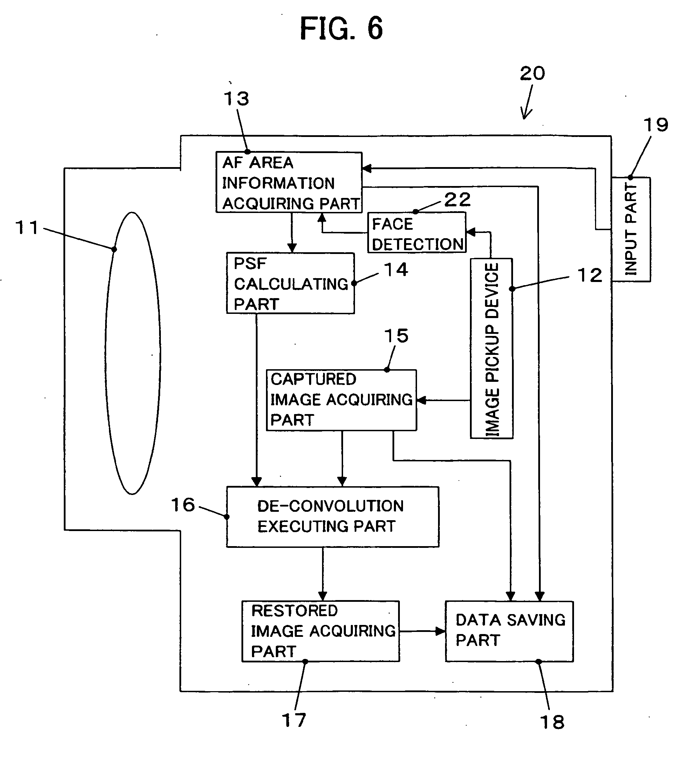

Fig. 6 is a figure showing a general configuration of a camera according to the second embodiment.

Herein, components having much the same functions as those in the foregoing first embodiment are denoted by the same reference symbols, upon which overlapping description will be omitted as appropriate.

A camera 20 of the second embodiment is equivalent to a form in which a face position detecting part 22 is further added to the camera 10 of the first embodiment.

The face position detecting part 22 acquires various kinds of information such as information about a contour shape of a face, distances or intervals of the respective parts including eyes, a nose, a mouth, ears, etc., and a color of skin, from image data before shooting, the data being held in the image pickup device 12, and recognizes a human face as a result of calculation and analyzing operation using the information so as to detect a position of the face.

The camera 20 of this embodiment is intended to bring an AF area to a position of the face detected by the face position detecting part 22, and focuses on that position. By doing so, shooting with the face being in focus is enabled regardless of any positions of the person's face within an image screen. Furthermore, even if a distance or position with respect to the subject is changed because of e.g. movement of the person or composition changing, the face position detecting part 22 continues to detect a position of the face.

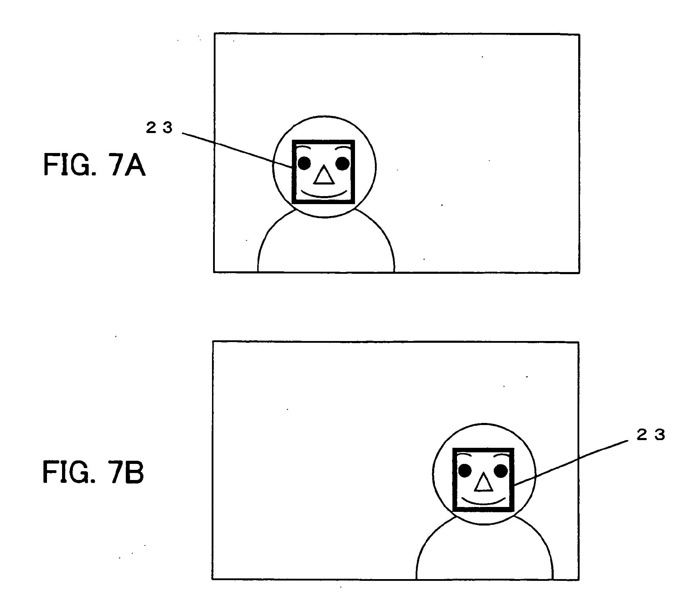

Fig. 7 shows an example of selection of an AF area of the camera of the second embodiment. As shown in Fig. 7A and (b) in this figure, the AF area 23 is placed in a position of the person's face even though the composition is changed.

Since the face position detecting part 22 also specifies a position of his/her eye when detecting the face, position information of the eye is sent to the AF area information acquiring part 13.

The AF area information acquiring part 13 sends the position information of the eye, obtained from the face position detecting part 22, to the PSF calculating part 14, and the PSF calculating part 14 obtains a PSF for an image in the position of the eye.

It is desirable to focus on an eye in the field of photographs targeting persons. In addition, an eye is a photographic subject that can be considered as substantially a point, and allows the PSF calculation to be accurately performed.

According to this embodiment, therefore, it is possible to carry out the PSF calculation more accurately and obtain a more favorable restored image in the field of photography targeted for persons.

(Third Embodiment)

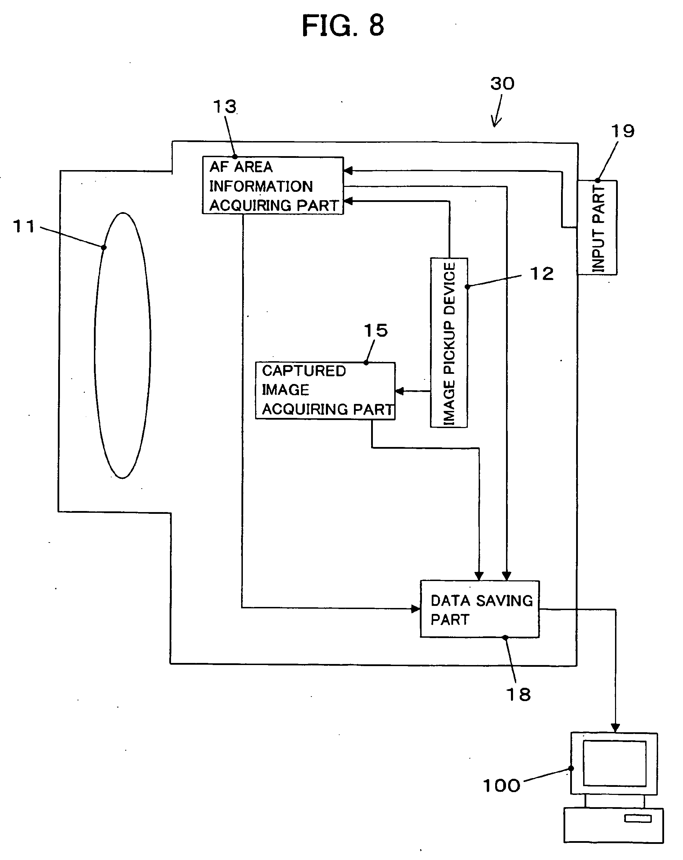

Fig. 8 is a figure representing a general configuration of a camera system according to the third embodiment.

Herein, components having much the same functions as those in the foregoing first embodiment are denoted by the same reference symbols, upon which overlapping description will be omitted as appropriate.

The camera system of the third embodiment comprises a camera 30 and a program installed in the computer 100.

The camera 30 of the third embodiment does not equip the PSF calculating part 14, de-convolution executing part 16 and restored image acquiring part 17 provided in the camera 10 of the first embodiment.

The AF area information acquiring part 13 provided in the camera 30 of the third embodiment specifies a position of a main subject within a captured image in a manner similar to the first embodiment. Information about the position of a main subject is added to the data of the captured image, which has been held in the captured image acquiring part 15, and the resultant data are saved in the data saving part 18.

The program installed in the computer 100 of the third embodiment includes a program causing the computer 100 to operate as follows upon installation of the program to the computer 100.

The program included in the camera system of the third embodiment causes the captured image data additionally having information about a position of a main subject, which has been saved in the data saving part 18, to be inputted to the computer 100. It should be noted that the way to input data saved in the data saving part 18 to the computer 100 may involve intervention of a memory card, measures capable of wired or wireless communication between the camera 30 and the computer 100 or intervention of different kinds of networks. Besides, the data saved in the data saving part 18 can be replicated, and therefore may be inputted to the computer 100 via a storage medium other than a memory card, e.g. a recording disk medium or the like.

The program included in the camera system of the third embodiment causes the computer 100 to operate in much the same manner as the PSF calculating part 14, de-convolution executing part 16 and restored image acquiring part 17 in the first embodiment.

The computer 100 in which the above-mentioned program is installed refers the position information of a main subject, which is obtained in concurrence with the inputted captured image data, and for the captured image data, calculates a PSF in blind de-convolution from an image of the corresponding position to obtain a restored image.

As an image restoration such as de-convolution requires an enormous amount of operations, the computer 100 may be utilized so as to carry out such operations at a high speed. The computer 100 may also utilized so as to conduct condition setting for image restoration calculation or something like that more precisely.

(Fourth Embodiment)

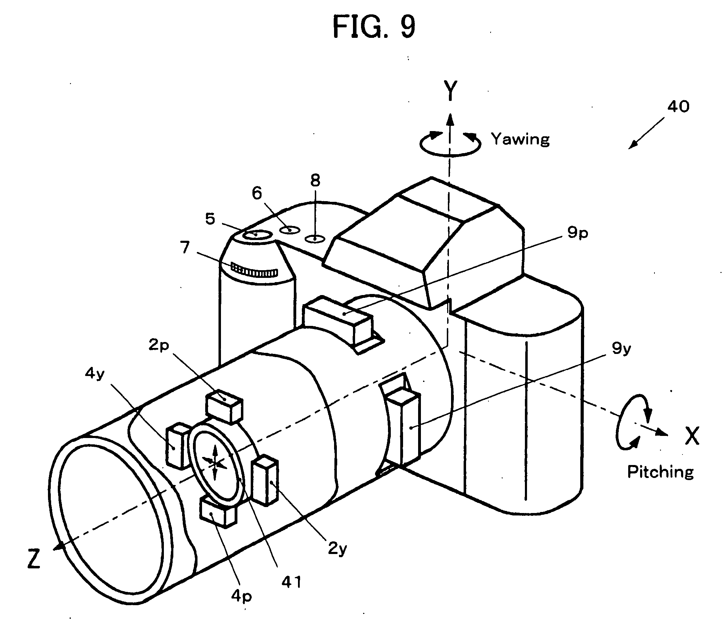

Fig. 9 is an illustration showing a camera according to the fourth embodiment.

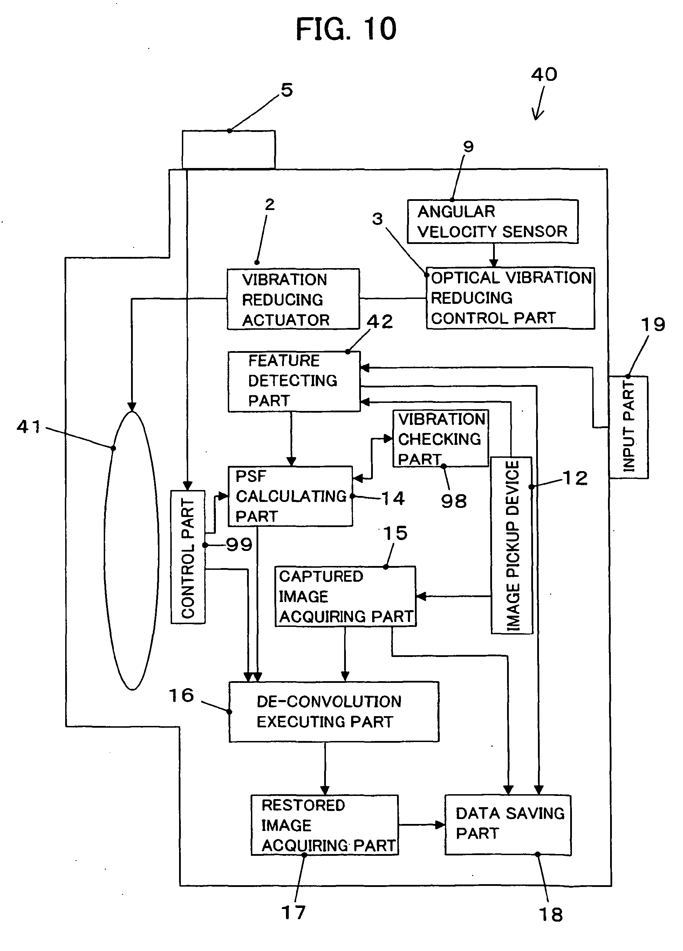

Fig. 10 is a figure representing a general configuration of the camera of the fourth embodiment.

The camera 40 of the fourth embodiment is intended to add an optical camera vibration reducing part and a feature detecting part 42 to the camera 10 of the first embodiment. In the present embodiment, it is possible to perform image restoration even for an image captured using the optical vibration reducing part by virtue of equipping the optical vibration reducing part. Firstly, such an optical vibration reducing part is described.

Herein, components having much the same functions as those in the foregoing first embodiment are denoted by the same reference symbols, upon which overlapping description will be omitted as appropriate.

The camera 40 has a lens 41, a camera vibration reducing actuator 2 (2p, 2y), an optical vibration reduction control part 3, a lens position detecting sensor 4 (4p, 4y), a release switch 5, a menu switch 6, a command selecting dial 7, a power supply switch 8, a vibration sensor 9 (9p, 9y), a feature detecting part 42, and so on.

The lens 41 forms a part of a photo-shooting optical system, and is provided movably with respect to the image pickup device 12 (mentioned later) in a plane substantially perpendicular to an optical axis Z. The lens 41 is comparable to a vibration reduction optical system for reducing vibration of image in the image pickup device 12 in such a way that the lens counter-moves in a direction in which the image vibration in an image of a subject due to vibration of the camera 40 is canceled.

The camera vibration reducing actuator 2 is a driving part comparable to generate driving force to move the lens 41, for which a voice coil motor or something else is used, for example. The vibration reducing actuator 2 comprises a vibration reducing actuator 2p driven at the time of correction for image vibration in a Pitching direction and a vibration reducing actuator 2y driven at the time of correction for image vibration in a Yawing direction.

The optical vibration reduction control part 3 is a circuit for driving the vibration reducing actuator 2, and performs driving for the vibration reducing actuator 2 in accordance with a driving target computed by a vibration reduction computing circuit, not shown.

The lens position detecting sensor 4 is a position sensor for detecting a position of the lens 41, and comprises a lens position detecting sensor 4p for detecting a position of the lens 41 at the time of correction for image vibration in a Pitching direction and a lens position detecting sensor 4y for detecting a position of the lens 41 at the time of correction for image vibration in a Yawing direction.

The vibration sensor 9 is an angular velocity sensor for detecting an angular velocity of the camera 40, and comprises a vibration sensor 9p for detecting Pitching vibration and a vibration sensor 9y for detecting Yawing vibration.

The camera 40 in this embodiment equips the two-system-type vibration reducing actuator 2, lens position detecting sensor 4, vibration sensor 9 and other control system for Pitching and Yawing, which drive the lens 41 so as to optically correct image vibration caused in the Pitching and Yawing.

The release switch 5 is a 2-step switch manipulated at the time of starting a shooting operation, and if its first step of stage is turned ON (pressed halfway), a shooting preparation operation such as photometric measurement and AF operation is started, and if its second step of stage is turned ON (pressed fully), a shutter (not shown) is activated and the shooting is started.

A menu switch 6 is a button for conducting display of a menu relating to various kinds of operations and selection of them.

A command selecting dial 7 is a rotating switch for changing a choice or numerical value sequentially by undergoing rolling manipulation, e.g. at the time of selecting a choice on the occasion of inputting for various kinds of operations.

A power supply switch 8 is a switch for switching between ON and OFF of a power supply for the camera.

This embodiment can perform image restoration even for an image shot using the above-described optical vibration reducing part. In this way, it is possible to correct image vibration that can not be completely corrected only by the optical vibration reduction. On the other hand, the optical vibration reduction has a higher possibility that a more satisfactory image is obtained than the image restoration in the case of image vibration due to hand movement, but has a characteristic in that image vibration caused by subject movement can not optimally be processed for correction. According to this embodiment, by combining the optical vibration reduction and the image restoration, it is possible to perform image burring correction that makes full use of their respective characteristics depending on the situation.

Next there will be description of the feature detecting part 42 added to the camera 10 of the first embodiment in accordance with the present embodiment.

The feature detecting part 42 is a part for detecting an area fitting to a feature of a subject designated by the photographer from image data captured by the image pickup device 12. As features of subjects used for detection in the feature detecting part 42, there are, for example, a face of a human, a face of an animal, a building, an automobile, a train, an airplane, a boat/ship, a flower, etc. In the case of detecting a face of a human, the face is detected in operations similar to the second embodiment. As for other features, their respective features are also detected in an image processing. The feature detecting part 42 detects, from an image, a subject fitting to a feature of a subject (e.g., a face of a human, a face of an animal) selected by the photographer's operation of the input part 19 prior to shooting among features of subjects registered beforehand in the feature detecting part 42, and identifies a position of the detected subject from within the captured image.

The PSF calculating part 14, according to information of the position of the subject (main subject) detected by the feature detecting part 42, carries out the PSF calculation using an image at the specified position of the main subject. By so doing, it is possible to obtain an ideal PSF.

In this embodiment, although information about an area fitting to a feature of the subject detected by the feature detecting part 42 is used for the calculation of PSF, this position information area may also be used to determine an AF area as with the second embodiment.

Herein, the feature detecting part 42 can detect more than one area in which there is a subject fitting to the selected subject feature. For example, when a selected feature of a subject is a face of a human, there may be plural persons within a subject field to be shot. In this case, the feature detecting part 42 specifies a main subject for plurally selected areas in accordance with the preset conditions, and the PSF calculating part 14 carries out the PSF calculation using an image at a position of the specified subject. When plural areas fitting to a feature of a subject have been detected by the feature detecting part 42, the PSF calculating part 14 carries out the following operations selectively.

(Mode 1)

The plurality of areas detected are displayed on a display part, not shown, and the PSF calculation is carried out for an area selected and inputted by the photographer via the input part 19, and subsequently de-convolution is performed using the obtained PSF.

(Mode 2)

The PSF calculation is carried out for the plurality of areas detected, respectively, and the calculation results are averaged to further obtain an average PSF. De-convolution is performed using this average PSF.

(Mode 3)

One area is automatically selected from the plurality of areas detected, and the PSF calculation is carried out for the selected area, and then de-convolution is performed by the obtained PSF. As a way to automatically select one area, it is possible to choice either of the following two ways: one way to select an area in which a sharp image with the highest degree of definition is obtained; and another way to select an area having the greatest ratio of an area occupied within the captured image".

As for which of the above-mentioned three Modes should be used and for which way should be used for the automatic selection in the case of Mode 3, the input part 19 may be used to let the photographer select and input it beforehand or select and input it every time occasion demands.

In this embodiment, a main subject can be specified more exactly using a feature of a subject as described above, and therefore, it is possible to acquire a satisfactory image meeting an intention of the photographer

The process of the PSF calculation and de-convolution described above requires complicated calculate processing and tends to take long processing time. During such processing, if other operation can not done, then the photographer has to wait for a completion of the processing, and further it is thought to lose a photo opportunity. With this being the situation, the present embodiment is intended to interrupt an image restoration calculation when any command with a higher priority are made active during execution of such an image restoration calculation as PSF calculation and de-convolution processing. In this embodiment, operation of the release switch 5, operation of the menu switch 6, operation of a command selecting dial 7, and operation of the power supply switch 8 are set as higher priority command. If the above-mentioned higher priority command is made active, the control part 99 causes the parts 14 and 16 to interrupt the image restoration calculation is interrupted and the operation is changed to an operation according to the corresponding higher priority command for operation of the release switch 5, operation of the menu switch 6, operation of a command selecting dial 7, and operation of the power supply switch 8.

(1) If the release switch 5 is manipulated during an image restoration calculation, the control part 99 stops supplying of a control signal causing the parts 14 and 16 to execute the image restoration calculation so as to interrupt the image restoration calculate operation of the parts 14 and 16 and to change over to the shooting operation. By doing so, the shooting can be prioritized. After completing the shooting operation, a process in progress of the interrupted image restoration calculation is read out to resume the image restoration calculation.

(2) If the menu switch 6 or the command dial 7 is manipulated during an image restoration calculation, the control 99 stops supplying of a control signal to the parts 14 and 16 to interrupt the image restoration calculation, and various kinds of setting operations according to the operation of the menu switch 6 or the operation of the command selecting dial 7 is accepted. After the command is completed or a predetermined time (e.g., 10 seconds) elapses from after no manipulating occurs, the image restoration calculation is resumed. Because various kinds of setting operations based on the operation of the menu switch 6 or the operation of the command selecting dial 7 are burdened with lower processing load than the above-mentioned shooting operation, the process in progress of the image restoration calculation does not have to be saved in a memory (not shown) within the camera body or the data saving part 18. However, if some command to execute a processing having a heavy processing load, such as browsing and processing of the already-captured images, processing according to the operation of the menu switch 6 or the operation of the command selecting dial 7 is executed after the process in progress of the image restoration calculation.

(3) If the power supply switch 8 is manipulated, or more specifically, if the power supply is turned OFF during execution of the image restoration calculation, the image restoration calculation is interrupted and trunk-retracting operation for a lens barrel or the like takes place, so as to become a power-down state in appearance. Subsequently, the image restoration calculation is resumed, and when the restored image is obtained, it is saved and thereafter the power supply for the processing circuit is turned OFF. In this case, display for teaching that the image restoration is being executed as back processing may be performed at the time of power-OFF.

Thus, in the present embodiment, the PSF calculation and de-convolution processing does not interfere with any commands when the photographer wants to make other commands during the image restoration calculation, whereby a camera with great manipulability can be achieved.

Referring to Fig. 10, a vibration checking part 98 checks whether or not the captured image includes image vibration, for example, based on the calculation results of the PSF calculating part 14.

For example, the control part 99 provides a control signal causing the parts 14 and 16 to execute the image restoration calculation to the parts 14 and 16 when the vibration checking part 98 has checked that image vibration is included, and it does not provide the control signal to the parts 14 and 16 when it has checked that the image vibration is not included.

(Fifth Embodiment)

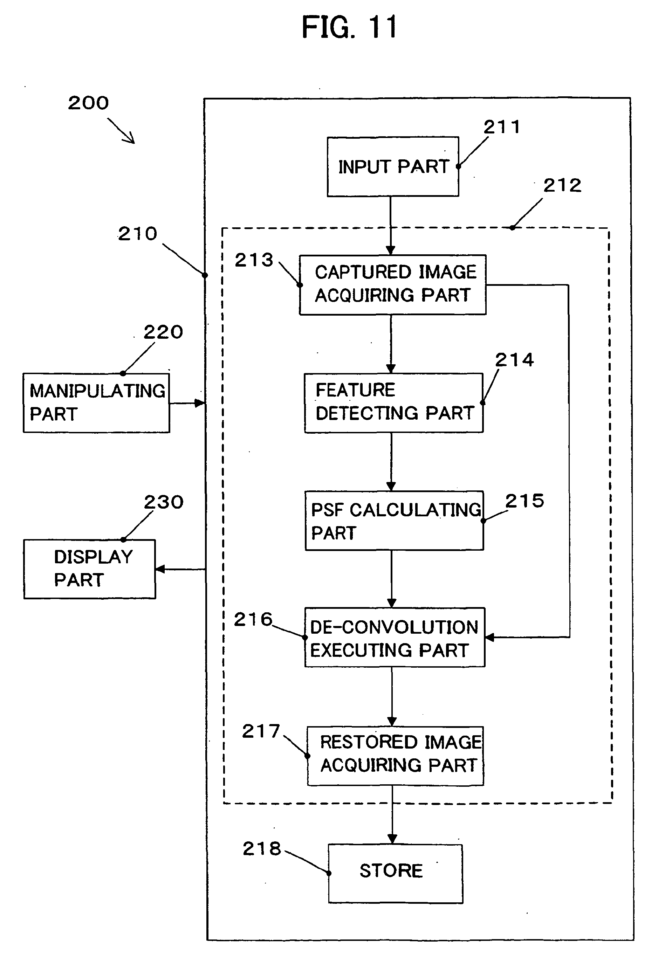

Fig. 11 is a figure showing a general configuration of an image restoration apparatus according to the fifth embodiment.

An image restoration apparatus 200 comprises a computer 210, a manipulating part 220 and a display part 230.

The computer 210 is a computer having an input part 211, a calculate processing part 212, a storing part 218, and more. Herein, it is assumed that a computer is not limited to general-purpose devices such as personal computers, and may include any devices comprising a dedicated calculate processing part that is specialized for image restoration processing.

The input part 211 is a device for inputting various kinds of information from the external, and may be a device for reading data from a medium such as a memory card or data recoding disk, or a device for reading data based on communication via a LAN or the like.

The calculate processing part 212 is comprised of a CPU, a memory, etc., in which in this embodiment, a program for image restoration is installed to perform operations as respective parts mentioned below on the basis of the program.

The captured image acquiring part 213 is a part for temporarily storing the already-captured image data inputted from the input part 211. It should be noted that the following description is given with reference to an example that only image data are stored in the captured image acquiring part 213 from the input part 211, but in another situation, information about an area (specific area) to be subjected to the PSF calculation among the image data may be inputted form the input part 211 in association with the image data. In this situation, an area detecting operation using the feature detecting part 214 described below does not take place, and a PSF calculation takes place for an area to be subjected to the PSF calculation, stored in association with the image data.

The feature detecting part 214 is a part for detecting an area fitting to a feature of a subject designated by the user from the already-captured image data inputted from the input part 211. Features of subjects used for detection of the feature detecting part 214 may include, for example, a face of a human, a face of an animal, a building, an automobile, a train, an airplane, a ship/boat, a flower, etc. The feature detecting part 214 detects, from an image, a subject fitting to a feature of a subject (e.g., a face of a human, a face of an animal, etc.) selected from a plurality of features of subjects beforehand registered in the feature detecting part 214 by the user's operation using the manipulating part 220, and identifies a position of the detected subject from within the already-captured image.

The PSF calculating part 215 calculates a PSF (Point spread Function) from the image data. The calculation of this PSF is the same as the embodiments in the foregoing. The PSF calculating part 215, according to information about a position of the subject (main subject) detected by the feature detecting part 214, performs a calculation of PSF using an image at the specified position of the main subject. In this way, an ideal PSF can be obtained.

The de-convolution part 216 is a part for completing an image restoration calculation for the image data using the PSF calculated by the PSF calculating part 215, in this embodiment by performing de-convolution to reduce image vibration included in the captured image.

The restored image acquiring part 217 is a part for temporarily storing the restored image obtained as a result of executing the de-convolution in the de-convolution executing part 216.

The data storing part 218 is a part for storing the restored image, and is supposed to record it in a medium such as a hard disk device, memory card or data recoding disk.

The manipulating part 220 has a pointing device such as a mouse or a touch panel, a keyboard device, etc. and is a part for performing various kinds of manipulating inputs to a main unit of the computer 210.

The display part 230 is a part for displaying various kinds of information and images for the image restoration apparatus.

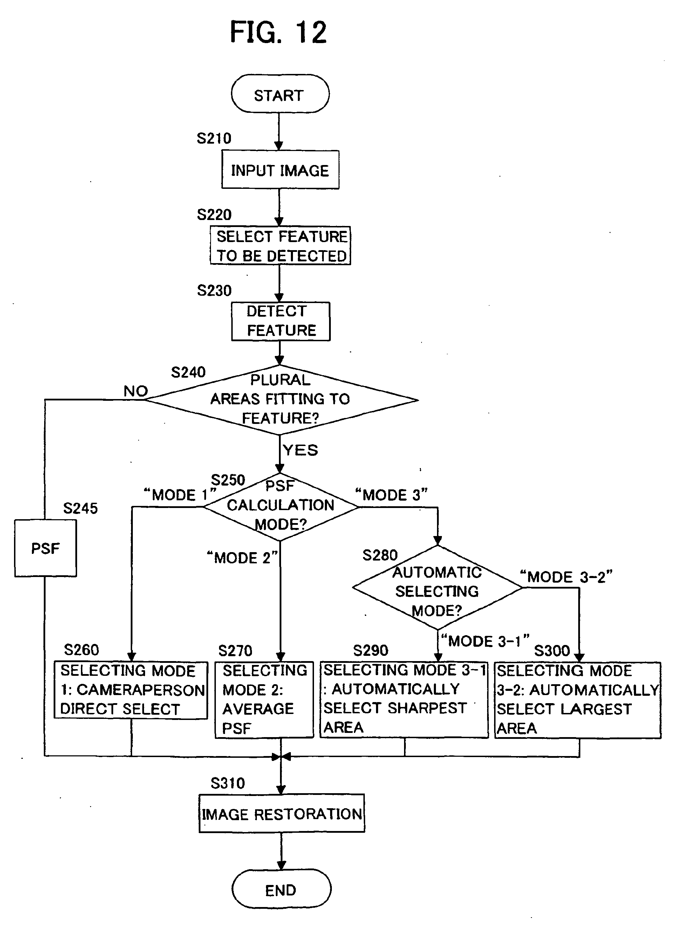

Fig. 12 is a flowchart for describing operations of the image restoration apparatus of the fifth embodiment.

Upon starting the operation of the image restoration apparatus, at first in a step (hereinafter, expressed just as "S") 210, an already-captured image is inputted from e.g., a memory card or the like, and stored in the captured image acquiring part 213.

In S220, displaying is made in the display part 230 or other measures take place to prompt the user to input a feature of a subject. For example, icons corresponding to a face of a human, a face of an animal, a building, an automobile, a train, an airplane, a ship/boat, a flower, etc. are displayed so as to cause the user to select and input a feature of a subject by use of a mouse or the like of the manipulating part 220.

In S230, the feature detecting part 214 detects an area fitting to a feature of a subject designated in S220.

At this point, the feature detecting part 214 can detect plural areas in which a subject fitting to the selected feature of a subject exists. For example, when the selected feature of a subject is a face of a human, there may be plural persons within a subject field to be shot.

In S240, it is determined whether there are plural areas fitting to a feature of the subject detected from the image by the feature detecting part 214. If yes, the flows proceeds to S250, and if only one fitting area is detected, a PSF for such a single region is calculated (S245) and it proceeds to S310.

In S250, display is made such that the user is prompted to select a mode of calculating a PSF from within the plurality of areas detected, and the user is supposed to select and input it. This embodiment is intended to let the user select one from the following three modes.

(Mode 1) This is a mode of displaying a plurality of areas being detected on the display part 230, and calculating a PSF for an area selected from them by the user via the manipulating part 220. If this mode is selected, the flow proceeds to S260.

(Mode 2) This is a mode of obtaining an average PSF for the plurally detected areas. If this mode is selected, the flow proceeds to S270.

(Mode 3) This is a mode of automatically selecting one area from the plurally detected areas, and a PSF calculation takes place for the selected area. If this mode is selected, the flow proceeds to S280.

In S260, a PSF is calculated according to Mode 1. That is, a PSF is calculated for an area selected by the user.

In S270, a PSF is calculated according to Mode 2. In this Mode 2, PSFs are calculated for the plurally detected areas, respectively to average them to further obtain an average PSF.

In S280, the user is made to select and input a sub-mode of automatically selecting an area to be subjected to a PSF calculation. Such an automatic selecting sub-mode may be any of the two following modes.

(Mode 3-1) This sub-mode is of selecting an area in which a sharp image can be obtained with the highest degree of definition. If this sub-mode is selected, the flow proceeds to S290.

(Mode 3-2) This sub-mode is of selecting an area having the greatest ratio of an area occupied within the captured image". If this sub-mode is selected, the flow proceeds to S300.

In S290, the PSF calculation takes place for an area in which a sharp image can be obtained with the highest degree of definition.

In S300, the PSF calculation takes place for an area having the greatest ratio of an area occupied within the captured image".

In S310, de-convolution is carried out with a PSF obtained in any one of Modes 1, 2, 3-1 and 3-2 to obtain a restored image, and then completes this process.

As for which of the above-mentioned four modes should be used, the used one may be selected and inputted by the user preliminarily.

In this embodiment, since a main subject can be specified more exactly using a feature of a subject as described above, it is possible to acquire a favorable image meeting an intention of the user.

As an image restoration calculation such as blind de-convolution requires an enormous amount of operations, the computer 210 may be utilized so as to carry out such operations at a higher speed. The computer 210 may also utilized so as to conduct condition setting for image restoration calculation or something like that more precisely.

(Modification)

The present invention is not limited to the embodiments described above, many kinds of modifications and variations can be realized, and these also come within the meaning and range of equivalency of the present invention.

(1) In the first embodiment, the description has been given in connection with an example that the AF area information acquiring part 13 compares a captured image with an image at the time of AF locking, which is provisionally saved at the time of AF locking, to specify at what position the subject covered by the AF area 21 at the time of AF locking is located within the captured image, but the invention is not limited to this example, or rather, for example, the AF area information acquiring part 13 may be arranged to recognize a subject in a position covered by the AF area at the time of AF locking, so as to successively update the position of the subject until the time of shooting to specify a position of a subject within the captured image. This arrangement may be implemented without many additional components by using image data used for a so-called through displayed image which continues to display an image obtained by the image pickup device on a display device provided on a rear face or the like of a camera before a shooting act.

(2) In the first and second embodiments, the description has been given in connection with an example that the PSF calculating part 14 and the de-convolution executing part 16 always perform PSF calculation and image restoring operation in the case of setting image restoration to be done, but the invention is not limited to this example, or rather, for example, it may be determined whether image vibration exists or not in the position of a main subject obtained by the AF area information acquiring part 13, and the image restoration may be performed only if the image vibration exists. In this case, it may be implemented that, for example, a function of judging presence or absence of image vibration is added to the AF area information acquiring part 13, and only if an instruction to carry out the image restoration is received from the AF area information acquiring part 13, the PSF calculating part 13 and the de-convolution executing part 16 perform their processing about the image restoration.

(3) Although in the embodiments it has been described by way of example that the specified position information of the main subject is used for the PSF calculation, the invention is not limited to this, and the position information may be used for other applications, e.g., of determining of an exposure value, correcting of exposure, changing of a gain (sensitivity), and so on.

(4) In the first embodiment and the second embodiment, it has been described by way of example that the data saving part 18 saves a captured image and a restored image, but in this case, the specified position information of the main subject may be added to the captured image, or the position information of the main subject and/or information about the calculated PSF, etc. may be added to the restored image.

(5) Although in the third embodiment it has been described by way of example that the image restoration is performed using the computer 100 in which a program is installed, the invention is not limited to this, and it may be performed using a device dedicated for the image restoration that is capable of operating in the same manner as the PSF calculating part 14, de-convolution executing part 16 and restored image acquiring part 17. Furthermore, such devices may be installed in service stores or business hub establishments, or somewhere of e.g. photo printing service dealers, and the photographer may pass the captured image data supplemented with information about the main subject position via a recoding medium or communication tool to the dealer, whereupon the dealer performs its image restoration processing and records the resultant restored image on a recording medium or prints it.

(6) Although in the third embodiment it has been described by way of example that information about a position of the main subject obtained in the same way as in the first embodiment is added to data of the captured image, the invention is not limited to this, and a position of a face may be determined as with the second embodiment to specify the position of the main subject and information of the position of this main subject may be added to the captured image data.

(7) Although in the third embodiment it has been described by way of example in which the camera 30 that does not have the PSF calculating part 14, de-convolution executing part 16 and restored image acquiring part 17 with which the camera 10 of the first embodiment is provided is used, the invention is not limited to this, and for example, it is possible to use a camera similar to the camera 10 of the first embodiment, the camera 20 of the second embodiment or the like and add information about a position of the main subject to data of the captured image.

(8) A "specific area" is not limited to the AF area, a position of the main subject, a position of a face, and a position of an eye, which have been described, or rather, any area within a captured image may be used as a specific area.

(9) Although in the fourth embodiment it has been described by way of example that the image restoration further takes place for an image shot while performing vibration reduction operation using the optical vibration reducing part, the invention is not limited to this, and for example, use may be made of a camera that does not have the optical vibration reducing part.

It should be noted that the image restoration using the point spread function (PSF) in the embodiments may be used together with a gray-scale compression technique by which only brightness of excessively bright or dark portions within an image screen is boosted as described in a U.S. Serial No. 11/224,926 filed on September 14, 2005 in the U.S.A. by the same applicant as the present application and a U.S. Serial No. 11/583,777 filed on October 20, 2006 in the U.S.A. by the same applicant as the present application.

In this case, the image restoration using a point spread function in the embodiments may be performed after the gray-scale compression technique is implemented. Alternatively, the gray-scale compression technique may be implemented after the image restoration using a point spread function in the embodiments is performed.

## Claims

1. A camera (10, 20, 30, 40) comprising an image restoration apparatus (10, 20, 30, 40, 200) comprising:

   a specific part (13, 42, 214) arranged to specify a specific area within a captured image; **characterized by**:

   a calculating part (14, 16, 215, 216) arranged to calculate a point spread function corresponding to image vibration in the specific area using an image in the specific area within the captured image, and to perform an image restoration calculation for the captured image using the point spread function, wherein
   the specific part (13) is arranged to store the position of an auto-focus area (21) used at a time of AF locking before a composition change set within a capture field of view of the camera,
   the specific part (13) is arranged to specify, as the specific area, by comparing a captured image before the composition change and a captured image after the composition change using the position of the auto-focus area used at the time of AF locking, an area of the captured image after the composition change in which a subject corresponding to the position of the auto-focus area used at the time of AF locking before the composition change exists when the composition changed, and
   the calculating part (14,16,215,216) is arranged to perform the image restoration calculation for the captured image after the composition change using the point spread function corresponding to the image vibration in the specific area so that the image vibration is corrected and the effect of defocusing performed by a user is maintained.

2. The camera (10, 20, 30) according to claim 1, wherein
   an image in the specific area specified prior to the change in composition is the image when imaging conditions of a lens (11) are fixed, and also the image in an area corresponding to the auto-focus area (21) set within the capture field of view of the camera.

3. The camera (10, 20, 30) according to claim 1, wherein
   the specific part (13) is arranged to specify the subject located in the auto-focus area (21) set within a capture field of view when imaging conditions of the lens (11) are fixed, to specify the area of the subject within a capture field of view by tracking the subject, and to set the specified area as the specific area.

**4.** The camera (20, 40) according to any one of claims 1 to 3, wherein
the specific part (13, 42) is arranged to set an area including a face of the subject as the specific area.

**5.** The camera (20, 40) according to claim 4, wherein
the specific part (13, 42) is arranged to set an area including an eye of a subject as the specific area.

**6.** The camera (10, 20, 30) according to any one of claims 1 to 5, further comprising an input part (19) for input of a position within the captured image, wherein the specific part (13) is arranged to set an area within the captured image corresponding to the position inputted by the input part (19) as the specific area.

**7.** The camera (10, 20) according to any one of claims 1 to 6, further comprising
a control part (99) arranged to control the calculating part (14, 16), and wherein
the calculating part is arranged to carry out the image restoration calculation when a control signal is supplied from the control part.

**8.** The camera (10, 20) according to claim 7, wherein
the control part (99) is arranged to supply the control signal to the calculating part (14, 16) when it is determined that the captured image includes image vibration.

**9.** A program arranged to cause a computer (100, 200) to function as:

a specific part (214) for specifying a specific area within a captured image; and
a calculating part (215, 216) for calculating a point spread function corresponding to image vibration in the specific area using an image in the specific area within the captured image, and for performing an image restoration calculation for the captured image using the point spread function, wherein
the specific part (13) is arranged to store the position of an auto-focus area (21) used at a time of AF locking before a composition change set within a capture field of view of the camera,
the specific part (13) is arranged to specify, as the specific area, by comparing a captured image before the composition change and a captured image after the composition change using the position of the auto-focus area used at the time of AF locking, an area of the captured image after the composition change in which a subject corresponding to the position of the auto-focus area used at the time of AF locking before the composition change exists when the composition changed, and
the calculating part is arranged to perform the image restoration calculation for the captured image after the composition change using the point spread function corresponding to the image vibration in the specified area, so that the image vibration is corrected and the effect of defocusing performed by a user is maintained.

**10.** The program according to claim 9, wherein
the calculating part (215, 216) is arranged to calculate the point spread function through iterative computation.

**11.** The program according to claims 9 or 10, wherein
the specific part (214, S230) is arranged to specify the specific area based on a feature of a subject.

**12.** The program according to claim 11, wherein
the program is arranged to cause a computer (200) to function as a subject feature input part (220, S20) for input of the feature of the subject.

**13.** The program according to claims 11 or 12, wherein
the specific part (214, S230) is arranged to use at least a face of the subject as the feature of the subject.

**14.** The program according to any one of claims 11 to 13, wherein
the program is arranged to cause a computer (200) to function as a specific area selecting part (214, S250 to S300) for selecting one specific area when there are a plurality of specific areas specified based on the feature of the subject by the specific part (214, S230).

**15.** The program according to claim 14, wherein
the specific area selecting part is arranged to select a sharpest area as a specific area.

**16.** The program according to claim 14, wherein

the specific area selecting part (S250 to S300) is arranged to select an area having the largest subject in a captured image as a specific area.

17. The camera (40) according to any one of claims 1 to 8, wherein
the specific part (42) is arranged to specify the specific area based on a feature of a subject.

18. The camera (40) according to claim 17, comprising:

a subject feature input part (19) for input of the feature of the subject.

19. The camera (40) according to claim 17 or 18, wherein
the specific part (42) is adapted to use at least a face of a subject as the feature of the subject.

20. The camera (40) according to any one of claims 17 to 19, comprising:

a specific area selecting part (214) arranged to select one specific area when there are a plurality of specific areas specified based on the feature of the subject by the specific part (42).

21. The camera (40) according to claim 20, wherein
the specific area selecting part (214) is arranged to select a sharpest area as a specific area.

22. The camera (40) according to claim 20, wherein
the specific area selecting part (214) is arranged to select an area having the largest subject in the captured image as a specific area.

23. The camera (40) according to any one of claims 1 to 8, wherein
the calculating part (14, 16) is arranged to interrupt or abort the image restoration calculation when a higher priority command is made active during the execution of the image restoration calculation.

24. The camera (40) according to claim 23, wherein
the higher priority command includes any operation selected from the group of operations consisting of:

operation of a release button (5), operation of a menu button (6), operation of a command selecting dial (7), and operation of a power supply button (8).

25. The camera (40) according to claims 23 or 24, wherein
the calculating part (14, 16) is arranged to resume the restoration calculation after completion of operations based on the higher priority command.

26. The camera (40) according to any one of claims 1 to 8, wherein
an optical vibration reducing part (2, 3, 9) is provided for reducing image vibration of a captured image by moving at least part of an optical shooting member during shooting action, and
the calculating part (14, 16) is capable of performing the image restoration calculation for the captured image obtained by use of the optical vibration reducing part.

**Patentansprüche**

1. Kamera (10, 20, 30, 40), umfassend ein Bildwiederherstellungsgerät (10, 20, 30, 40, 200), umfassend:

einen spezifischen Teil (13, 42, 214), der eingerichtet ist, um einen spezifischen Bereich innerhalb eines aufgenommenen Bildes vorzugeben; **gekennzeichnet durch**:

einen Rechenteil (14, 16, 215, 216), der eingerichtet ist, um eine Punktspreizfunktion, die einer Bildvibration in dem spezifischen Bereich entspricht, unter Verwendung eines Bildes in dem spezifischen Bereich innerhalb des aufgenommenen Bildes zu berechnen und um eine Bildwiederherstellungsberechnung für das aufgenommene Bild unter Verwendung der Punktspreizfunktion auszuführen, wobei
der spezifische Teil (13) eingerichtet ist, um die Position eines Autofokus-Bereichs (21) zu speichern, der zum Zeitpunkt einer AF-Sperre vor einer Kompositionsänderung, die innerhalb eines Aufnahmeblickfeldes der Kamera eingestellt wird, verwendet wird,

der spezifische Teil (13) eingerichtet ist, um **durch** Vergleichen eines aufgenommenen Bildes vor der Kompositionsänderung und eines aufgenommenen Bildes nach der Kompositionsänderung unter Verwendung der Position des Autofokus-Bereichs, die nach dem Zeitpunkt der AF-Sperre verwendet wird, einen Bereich des aufgenommenen Bildes nach der Kompositionsänderung als den spezifischen Bereich vorzugeben, wobei ein Motiv, das der Position des Autofokus-Bereichs entspricht, die zum Zeitpunkt der AF-Sperre vor der Kompositionsänderung verwendet wird, vorliegt, wenn sich die Komposition geändert hat, und

der Rechenteil (14, 16, 215, 216) eingerichtet ist, um die Bildwiederherstellungsberechnung für das aufgenommene Bild nach der Kompositionsänderung unter Verwendung der Punktspreizfunktion, die der Bildvibration in dem spezifischen Bereich entspricht, verwendet wird, so dass die Bildvibration korrigiert wird und der Effekt der Defokussierung, die von einem Benutzer ausgeführt wird, beibehalten wird.

**2.** Kamera (10, 20, 30) nach Anspruch 1, wobei
ein Bild in dem spezifischen Bereich, der vor der Änderung der Komposition vorgegeben wird, das Bild ist, wenn die Bildgebungsbedingungen einer Linse (11) festgelegt sind, sowie das Bild in einem Bereich, der dem Autofokus-Bereich (21) entspricht, der in dem Aufnahmeblickfeld der Kamera eingestellt ist.

**3.** Kamera (10, 20, 30) nach Anspruch 1, wobei
der spezifische Teil (13) eingerichtet ist, um das Motiv vorzugeben, das sich in dem Autofokus-Bereich (21) befindet, der innerhalb eines Aufnahmeblickfeldes eingestellt ist, wenn die Bildgebungsbedingungen der Linse (11) festgelegt sind, um den Bereich des Motivs innerhalb eines Aufnahmeblickfeldes vorzugeben, indem das Motiv verfolgt wird, und um den vorgegebenen Bereich als den spezifischen Bereich einzustellen.

**4.** Kamera (20, 40) nach einem der Ansprüche 1 bis 3, wobei der spezifische Teil (13, 42) eingerichtet ist, um einen Bereich einzustellen, der eine Seite des Motivs als den spezifischen Bereich umfasst.

**5.** Kamera (20, 40) nach Anspruch 4, wobei
der spezifische Teil (13, 42) eingerichtet ist, um einen Bereich einzustellen, der ein Auge eines Motivs als den spezifischen Bereich umfasst.

**6.** Kamera (10, 20, 30) nach einem der Ansprüche 1 bis 5, ferner umfassend einen Eingabeteil (19) zum Eingeben einer Position innerhalb des aufgenommenen Bildes, wobei der spezifische Teil (13) eingerichtet ist, um einen Bereich innerhalb des aufgenommenen Bildes einzustellen, welcher der Position entspricht, die von dem Eingabeteil (19) als der spezifischer Bereich eingegeben wird.

**7.** Kamera (10, 20) nach einem der Ansprüche 1 bis 6, ferner umfassend
einen Steuerteil (99), der eingerichtet ist, um den Rechenteil (14, 16) zu steuern, und wobei
der Rechenteil eingerichtet ist, um eine Bildwiederherstellungsberechnung auszuführen, wenn ein Steuersignal von dem Steuerteil zugeführt wird.

**8.** Kamera (10, 20) nach Anspruch 7, wobei
der Steuerteil (99) eingerichtet ist, um das Steuersignal dem Rechenteil (14, 16) zuzuführen, wenn bestimmt wird, dass das aufgenommene Bild eine Bildvibration umfasst.

**9.** Programm, das eingerichtet ist, um zu bewirken, dass ein Computer (100, 200) funktioniert als:

ein spezifischer Teil (214) zum Vorgeben eines spezifischen Bereichs innerhalb eines aufgenommenen Bildes; und
ein Rechenteil (215, 216) zum Berechnen einer Punktspreizfunktion, die einer Bildvibration in dem spezifischen Bereich entspricht, unter Verwendung eines Bildes in dem spezifischen Bereich innerhalb des aufgenommenen Bildes, und zum Ausführen einer Bildwiederherstellungsberechnung für das aufgenommene Bild unter Verwendung der Punktspreizfunktion, wobei
der spezifische Teil (13) eingerichtet ist, um die Position eines Autofokus-Bereichs (21) zu speichern, die zum Zeitpunkt einer AF-Sperre vor einer Kompositionsänderung, die innerhalb eines Aufnahmeblickfeldes der Kamera eingestellt wird, verwendet wird,
der spezifische Teil (13) eingerichtet ist, um als den spezifischen Bereich durch Vergleichen eines aufgenommenen Bildes vor der Kompositionsänderung und eines aufgenommenen Bildes nach der Kompositionsänderung unter Verwendung der Position des Autofokus-Bereichs, die zum Zeitpunkt der AF-Sperre verwendet wird, einen Bereich des aufgenommenen Bildes nach der Kompositionsänderung vorzugeben, in dem ein Motiv, das der Position des Autofokus-Bereichs entspricht, der zum Zeitpunkt der AF-Sperre vor der Kompositionsänderung verwendet wird, existiert, wenn sich die Komposition ändert, und
der Rechenteil eingerichtet ist, um die Bildwiederherstellungsberechnung für das aufgenommene Bild nach der Kompositionsänderung unter Verwendung der Punktspreizfunktion auszuführen, die der Bildvibration in dem vorgegebenen Bereich entspricht, so dass die Bildvibration korrigiert wird und der Effekt der Defokussierung, die von einem Benutzer ausgeführt wird, beibehalten wird.

10. Programm nach Anspruch 9, wobei
der Rechenteil (215, 216) eingerichtet ist, um die Punktspreizfunktion durch iterative Berechnung zu berechnen.

11. Programm nach Anspruch 9 oder 10,
wobei der spezifische Teil (214, S230) eingerichtet ist, um den spezifischen Bereich basierend auf einem Merkmal eines Motivs vorzugeben.

12. Programm nach Anspruch 11, wobei
das Programm eingerichtet ist, um zu bewirken, dass ein Computer (200) als Motivmerkmalseingabeteil (220, S20) für die Eingabe des Merkmals des Motivs funktioniert.

13. Programm nach Anspruch 11 oder 12, wobei
der spezifische Teil (214, S230) eingerichtet ist, um mindestens eine Seite des Motivs als Merkmal des Motivs zu verwenden.

14. Programm nach einem der Ansprüche 11 bis 13, wobei
das Programm eingerichtet ist, um zu bewirken, dass ein Computer (200) als spezifischer Bereichsauswahlteil (214, S250 bis S300) funktioniert, um einen spezifischen Bereich auszuwählen, wenn es eine Vielzahl spezifischer Bereiche gibt, die basierend auf dem Merkmal des Motivs durch den spezifischen Teil (214, S230) vorgegeben sind.

15. Programm nach Anspruch 14, wobei
der spezifische Bereichsauswahlteil eingerichtet ist, um einen schärfsten Bereich als einen spezifischen Bereich auszuwählen.

16. Programm nach Anspruch 14, wobei
der spezifische Bereichsauswahlteil (S250 bis S300) eingerichtet ist, um als einen spezifischen Bereich einen Bereich auszuwählen, der das größte Motiv in einem aufgenommenen Bild aufweist.

17. Kamera (40) nach einem der Ansprüche 1 bis 8, wobei
der spezifische Teil (42) eingerichtet ist, um den spezifischen Bereich basierend auf einem Merkmal eines Motivs vorzugeben.

18. Kamera (40) nach Anspruch 17, umfassend:

   einen Motivmerkmalseingabeteil (19) zum Eingeben des Merkmals des Motivs.

19. Kamera (40) nach Anspruch 17 oder 18, wobei
der spezifische Teil (42) dazu geeignet ist, um mindestens eine Seite eines Motivs als Merkmal des Motivs zu verwenden.

20. Kamera (40) nach einem der Ansprüche 17 bis 19, umfassend:

   einen spezifischen Bereichsauswahlteil (214), der eingerichtet ist, um einen spezifischen Bereich auszuwählen, wenn es eine Vielzahl von spezifischen Bereichen gibt, die basierend auf dem Merkmal des Motivs durch den spezifischen Teil (42) vorgegeben sind.

21. Kamera (40) nach Anspruch 20, wobei
der spezifische Bereichsauswahlteil (214) eingerichtet ist, um einen schärfsten Bereich als einen spezifischen Bereich auszuwählen.

**22.** Kamera (40) nach Anspruch 20, wobei
der spezifische Bereichsauswahlteil (214) eingerichtet ist, um als einen spezifischen Bereich einen Bereich auszuwählen, der das größte Motiv in dem aufgenommenen Bild aufweist.

**23.** Kamera (40) nach einem der Ansprüche 1 bis 8, wobei
der Rechenteil (14, 16) eingerichtet ist, um die Bildwiederherstellungsberechnung zu unterbrechen oder abzubrechen, wenn ein Befehl höherer Priorität während der Ausführung der Bildwiederherstellungsberechnung aktiviert wird.

**24.** Kamera (40) nach Anspruch 23, wobei
der Befehl höherer Priorität eine beliebige Bedienung umfasst, die aus der Gruppe von Bedienungen ausgewählt wird, die aus: der Bedienung einer Auslösetaste (5), der Bedienung einer Menütaste (6), der Bedienung eines Befehlsauswahlrads (7) und der Bedienung einer Stromversorgungstaste (8) besteht.

**25.** Kamera (40) nach Anspruch 23 oder 24, wobei
der Rechenteil (14, 16) eingerichtet ist, um die Wiederherstellungsberechnung nach der Beendigung der Bedienungen basierend auf dem Befehl höherer Priorität wiederaufzunehmen.

**26.** Kamera (40) nach einem der Ansprüche 1 bis 8, wobei
ein optischer Vibrationsreduzierungsteil (2, 3, 9) bereitgestellt wird, um die Bildvibration eines aufgenommenen Bildes zu reduzieren, indem mindestens ein Teil eines optischen Aufnahmeelements während der Aufnahmeaktion bewegt wird, und
der Rechenteil (14, 16) in der Lage ist, die Bildwiederherstellungsberechnung für das aufgenommene Bild auszuführen, das durch die Verwendung des optischen Vibrationsreduzierungsteils erzielt wird.

**Revendications**

**1.** Appareil photo (10, 20, 30, 40) comprenant un appareil de restauration d'image (10, 20, 30, 40, 200) comprenant :

une partie spécifique (13, 42, 214) agencée pour spécifier une zone spécifique dans une image capturée ;
**caractérisé par** :
une partie de calcul (14, 16, 215, 216) agencée pour calculer une fonction d'étalement de point correspondant à une vibration d'image dans la zone spécifique en utilisant une image dans la zone spécifique dans l'image capturée, et pour effectuer un calcul de restauration d'image pour l'image capturée en utilisant la fonction d'étalement de point, où
la partie spécifique (13) est agencée pour stocker la position d'une zone de mise au point automatique (21) utilisée à un moment de verrouillage AF avant un changement de composition défini dans un champ de capture de vue de l'appareil photo,
la partie spécifique (13) est agencée pour spécifier, comme étant la zone spécifique, en comparant une image capturée avant le changement de composition et une image capturée après le changement de composition en utilisant la position de la zone de mise au point automatique utilisée au moment du verrouillage AF, une zone de l'image capturée après le changement de composition dans laquelle un sujet correspondant à la position de la zone de mise au point automatique utilisée au moment du verrouillage AF avant le changement de composition existe lorsque la composition change, et
la partie de calcul (14, 16, 215, 216) est agencée pour effectuer le calcul de restauration d'image pour l'image capturée après le changement de composition en utilisant la fonction d'étalement de point correspondant à la vibration d'image dans la zone spécifique de sorte que la vibration d'image soit corrigée et l'effet de défocalisation effectué par un utilisateur soit maintenu.

**2.** Appareil photo (10, 20, 30) selon la revendication 1, dans lequel
une image dans la zone spécifique spécifiée avant le changement de la composition est l'image lorsque des conditions de formation d'image d'une lentille (11) sont fixées, et également l'image dans une zone correspondant à la zone de mise au point automatique (21) définie dans le champ de capture de vue de l'appareil photo.

**3.** Appareil photo (10, 20, 30) selon la revendication 1, dans lequel

la partie spécifique (13) est agencée pour spécifier le sujet situé dans la zone de mise au point automatique (21) définie dans un champ de capture de vue lorsque des conditions de formation d'image de la lentille (11) sont fixées, pour spécifier la zone du sujet dans un champ de capture de vue en suivant le sujet, et pour définir la zone spécifiée comme étant la zone spécifique.

4.  Appareil photo (20, 40) selon l'une quelconque des revendications 1 à 3, dans lequel
la partie spécifique (13, 42) est agencée pour définir une zone comportant le visage du sujet comme étant la zone spécifique.

5.  Appareil photo (20, 40) selon la revendication 4, dans lequel
la partie spécifique (13, 42) est agencée pour définir une zone comportant un oeil d'un sujet comme étant la zone spécifique.

6.  Appareil photo (10, 20, 30) selon l'une quelconque des revendications 1 à 5, comprenant en outre une partie d'entrée (19) destinée à introduire une position dans l'image capturée, où la partie spécifique (13) est agencée pour définir une zone dans l'image capturée correspondant à la position introduite par la partie d'entrée (19) comme étant la zone spécifique.

7.  Appareil photo (10, 20) selon l'une quelconque des revendications 1 à 6, comprenant en outre
une partie de commande (99) agencée pour commander la partie de calcul (14, 16), et où
la partie de calcul est agencée pour effectuer le calcul de restauration d'image lorsqu'un signal de commande est fourni à partir de la partie de commande.

8.  Appareil photo (10, 20) selon la revendication 7, dans lequel
la partie de commande (99) est agencée pour fournir le signal de commande à la partie de calcul (14, 16) lorsqu'il est déterminé que l'image capturée comporte une vibration d'image.

9.  Programme agencé pour amener un ordinateur (100, 200) à fonctionner comme étant :

    une partie spécifique (214) destinée à spécifier une zone spécifique dans une image capturée ; et
    une partie de calcul (215, 216) destinée à calculer une fonction d'étalement de point correspondant à une vibration d'image dans la zone spécifique en utilisant une image dans la zone spécifique dans l'image capturée, et à effectuer un calcul de restauration d'image pour l'image capturée en utilisant la fonction d'étalement de point, où
    la partie spécifique (13) est agencée pour stocker la position d'une zone de mise au point automatique (21) utilisée à un moment de verrouillage AF avant un changement de composition défini dans un champ de capture de vue de l'appareil photo,
    la partie spécifique (13) est agencée pour spécifier, comme étant la zone spécifique, en comparant une image capturée avant le changement de composition et une image capturée après le changement de composition en utilisant la position de la zone de mise au point automatique utilisée au moment du verrouillage AF, une zone de l'image capturée après le changement de composition dans laquelle un sujet correspondant à la position de la zone de mise au point automatique utilisée au moment du verrouillage AF avant le changement de composition existe lorsque la composition change, et
    la partie de calcul est agencée pour effectuer le calcul de restauration d'image pour l'image capturée après le changement de composition en utilisant la fonction d'étalement de point correspondant à la vibration d'image dans la zone spécifiée, de sorte que la vibration d'image soit corrigée et l'effet de défocalisation effectué par un utilisateur soit maintenu.

10. Programme selon la revendication 9, dans lequel
la partie de calcul (215, 216) est agencée pour calculer la fonction d'étalement de point par calcul itératif.

11. Programme selon la revendication 9 ou 10, dans lequel
la partie spécifique (214, S230) est agencée pour spécifier la zone spécifique sur la base d'une caractéristique d'un sujet.

12. Programme selon la revendication 11, dans lequel le programme est agencé pour amener un ordinateur (200) à fonctionner en tant que partie d'entrée de caractéristique de sujet (220, S20) destinée à introduire la caractéristique du sujet.

**13.** Programme selon la revendication 11 ou 12, dans lequel
la partie spécifique (214, S230) est agencée pour utiliser au moins le visage du sujet comme étant la caractéristique du sujet.

**14.** Programme selon l'une quelconque des revendications 11 à 13, dans lequel
le programme est agencé pour amener un ordinateur (200) à fonctionner en tant que partie de sélection de zone spécifique (214, S250 à S300) destinée à sélectionner une zone spécifique lorsqu'il y a une pluralité de zones spécifiques spécifiées sur la base de la caractéristique du sujet par la partie spécifique (214, S230).

**15.** Programme selon la revendication 14, dans lequel la partie de sélection de zone spécifique est agencée pour sélectionner la zone la plus nette en tant que zone spécifique.

**16.** Programme selon la revendication 14, dans lequel la partie de sélection de zone spécifique (S250 à S300) est agencée pour sélectionner une zone comportant le plus grand sujet dans une image capturée comme étant une zone spécifique.

**17.** Appareil photo (40) selon l'une quelconque des revendications 1 à 8, dans lequel
la partie spécifique (42) est agencée pour spécifier la zone spécifique sur la base d'une caractéristique d'un sujet.

**18.** Appareil photo (40) selon la revendication 17, comprenant :

une partie d'entrée de caractéristique de sujet (19) destinée à introduire la caractéristique du sujet.

**19.** Appareil photo (40) selon la revendication 17 ou 18, dans lequel
la partie spécifique (42) est adaptée pour utiliser au moins le visage d'un sujet comme étant la caractéristique du sujet.

**20.** Appareil photo (40) selon l'une quelconque des revendications 17 à 19, comprenant :

une partie de sélection de zone spécifique (214) agencée pour sélectionner une zone spécifique lorsqu'il y a une pluralité de zones spécifiques spécifiées sur la base de la caractéristique du sujet par la partie spécifique (42).

**21.** Appareil photo (40) selon la revendication 20, dans lequel
la partie de sélection de zone spécifique (214) est agencée pour sélectionner la zone la plus nette en tant que zone spécifique.

**22.** Appareil photo (40) selon la revendication 20, dans lequel
la partie de sélection de zone spécifique (214) est agencée pour sélectionner une zone comportant le plus grand sujet dans l'image capturée en tant que zone spécifique.

**23.** Appareil photo (40) selon l'une quelconque des revendications 1 à 8, dans lequel
la partie de calcul (14, 16) est agencée pour interrompre ou annuler le calcul de restauration d'image lorsqu'une commande de priorité supérieure est rendue active pendant l'exécution du calcul de restauration d'image.

**24.** Appareil photo (40) selon la revendication 23, dans lequel
la commande de priorité supérieure comporte tout actionnement sélectionné parmi le groupe des actionnements constitué : d'un actionnement d'un bouton de déclenchement (5), d'un actionnement d'un bouton de menu (6), d'un actionnement d'un cadran de sélection de commande (7), et d'un actionnement d'un bouton d'alimentation électrique (8).

**25.** Appareil photo (40) selon la revendication 23 ou 24, dans lequel
la partie de calcul (14, 16) est agencée pour reprendre le calcul de restauration après achèvement des actionnements sur la base de la commande de priorité supérieure.

**26.** Appareil photo (40) selon l'une quelconque des revendications 1 à 8, dans lequel
une partie de réduction de vibration optique (2, 3, 9) est prévue pour réduire une vibration d'image d'une image capturée en déplaçant au moins une partie d'un élément de prise de vue optique pendant une action de prise de vue, et la partie de calcul (14, 16) est capable d'effectuer le calcul de restauration d'image pour l'image capturée obtenue par l'utilisation de la partie de réduction de vibration optique.

# FIG. 1

## FIG. 2

```
                    ┌──────────┐
                    │  START   │
                    └──────────┘
                         │
                         ▼
        S10      ◇ HALFWAY      ◇ ──NO──►
                 ◇ PRESS ON?    ◇
                         │
                        YES
                         │
                         ▼
        S20      ◇ IN FOCUS?    ◇ ──NO──►
                         │
                        YES
                         │
                         ▼
        S30   ┌────────────────────────┐
              │ PROVISIONALLY SAVE     │
              │ IMAGE IN AF LOCKING    │
              └────────────────────────┘
                         │
                         ▼
        S40      ◇ HALFWAY      ◇ ──NO──►
                 ◇ PRESS ON?    ◇
                         │
                        YES
                         │
                         ▼
        S50      ◇ FULL PRESS?  ◇
                  NO │      │
                     │     YES
                         │
                         ▼
        S60         ┌──────────┐
                    │  SHOOT   │
                    └──────────┘
                         │
                         ▼
        S70   ┌────────────────────────┐
              │ SPECIFY MAIN           │
              │ SUBJECT POSITION       │
              └────────────────────────┘
                         │
                         ▼
        S80   ┌────────────────────────┐
              │ BLIND DE-CONVOLUTION   │
              └────────────────────────┘
                         │
                         ▼
        S90   ┌────────────────────────┐
              │ PSF CALCULATION        │
              └────────────────────────┘
                         │
                         ▼
        S100  ┌────────────────────────┐
              │ DE-CONVOLUTION         │
              │ FOR WHOLE SCREEN       │
              └────────────────────────┘
                         │
                         ▼
        S110  ┌────────────────────────┐
              │ SAVE RESTORED IMAGE    │
              └────────────────────────┘
```

FIG. 3A

2 1

FIG. 3B

2 1

FIG. 3C

FIG. 4A

FIG. 4B

# FIG. 5

# FIG. 6

FIG. 7A

FIG. 7B

# FIG. 8

# FIG. 9

EP 1 845 411 B1

# FIG. 10

# FIG. 11

200

211
INPUT PART

212

210

213
CAPTURED IMAGE
ACQUIRING PART

220
MANIPULATING
PART

214
FEATURE
DETECTING PART

215
PSF CALCULATING
PART

230
DISPLAY
PART

216
DE-CONVOLUTION
EXECUTING PART

217
RESTORED IMAGE
ACQUIRING PART

218
STORE

# FIG. 12

```
                    ┌─────────┐
                    │  START  │
                    └─────────┘
                         │
   S210                  ▼
                  ┌──────────────┐
                  │ INPUT IMAGE  │
                  └──────────────┘
                         │
   S220                  ▼
                  ┌──────────────┐
                  │SELECT FEATURE│
                  │TO BE DETECTED│
                  └──────────────┘
                         │
   S230                  ▼
                  ┌──────────────┐
                  │   DETECT     │
                  │   FEATURE    │
                  └──────────────┘
                         │
        S240             ▼
   NO         ╱ PLURAL       ╲
  ◄──────────  AREAS FITTING TO
             ╲   FEATURE?    ╱
                    │
                    ▼ YES
```

- S240 PLURAL AREAS FITTING TO FEATURE? — NO / YES
- S245 PSF
- S250 PSF CALCULATION MODE? — "MODE 1" / "MODE 2" / "MODE 3"
- S280 AUTOMATIC SELECTING MODE? — "MODE 3-1" / "MODE 3-2"
- S260 SELECTING MODE 1: CAMERAPERSON DIRECT SELECT
- S270 SELECTING MODE 2: AVERAGE PSF
- S290 SELECTING MODE 3-1 : AUTOMATICALLY SELECT SHARPEST AREA
- S300 SELECTING MODE 3-2: AUTOMATICALLY SELECT LARGEST AREA
- S310 IMAGE RESTORATION
- END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004205799 A
- US 2006078218 A1
- US 11224926 B
- US 11583777 B

**Non-patent literature cited in the description**

- **G. R. AYERS ; J. C. DAINTY.** Iterative blind de-convolution method and its applications. *Optics Letters,* July 1988, vol. 13 (7), 547-549